# FASCICULE DE BREVET EUROPEEN

(11) **EP 2 816 757 B1**
(45) Date de publication et mention de la délivrance du brevet: **31.08.2022**
(21) Numéro de dépôt: 14171232.3
(22) Date de dépôt: 05.06.2014
(51) Int. Cl.: G09C 1/00, H04L 9/08, H04L 9/32

(54) **Procédé et dispositif cryptographique unique à fonction physiquement induplicable**
Einmaliges kryptografisches Verfahren und einmalige kryptografische Vorrichtung mit einer physikalisch nicht wiederholbaren Funktion
Single cryptographic device and method with physically unduplicable function

(30) Priorité: 18.06.2013 EP 13172569; 03.10.2013 EP 13187257
(43) Date de publication de la demande: 24.12.2014
(73) Titulaire: Nagravision Sàrl, 1033 Cheseaux-sur-Lausanne (CH)
(72) Inventeur: Macchetti (IT), Marco, 22070 Casnate con Bernate (IT); Favi, Claudio, 1867 Ollon (CH)
(74) Mandataire: Hoyng Rokh Monegier B.V.

(56) Documents cités:
- EP-A1- 2 081 170
- WO-A1-2014/113255
- MICHAEL S KIRKPATRICK ET AL: "PUF ROKs", INFORMATION, COMPUTER AND COMMUNICATIONS SECURITY, ACM, 2 PENN PLAZA, SUITE 701 NEW YORK NY 10121-0701 USA, 22 mars 2011 (2011-03-22), pages 155-164, XP058002607, DOI: 10.1145/1966913.1966934 ISBN: 978-1-4503-0564-8
- SHOHREH SHARIF MANSOURI ET AL: "Ring Oscillator Physical Unclonable Function with Multi Level Supply Voltages", ARXIV.ORG, 17 juillet 2012 (2012-07-17), XP055124564, Arxiv
- Roes Maes ET AL: "Toward Hardware-Intrinsic Security : Physically Unclonable Functrions: A study on the state of the Art and Future Research Directions" In: "Toward Hardware-Intrinsic Security : Physically Unclonable Functrions: A study on the state of the Art and Future Research Directions", 4 novembre 2010 (2010-11-04), XP055142523, pages 3-37, * figure 8 * * alinéa [05.3] *
- Pim Tuyls ET AL: "security with noisy data" In: "security with noisy data", 1 January 2007 (2007-01-01), Springer, XP055248945, ISBN: 978-1-84628-984-2 pages 293-312,
- "Chapter 1: Overview of Cryptography ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 1 - 48 , 1 October 1996 (1996-10-01), XP001525001, ISBN: 978-0-8493-8523-0 Retrieved from the Internet: URL:http://www.cacr.math.uwaterloo.ca/hac/
- LAZICH DEJAN E ET AL: "Protection of Sensitive Security Parameters in Integrated Circuits", 31 December 2008 (2008-12-31), INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 157 - 178, XP047430483, ISBN: 978-3-642-17318-9
- TIM GUNEYSU ET AL: "Dynamic Intellectual Property Protection for Reconfigurable Devices", FIELD-PROGRAMMABLE TECHNOLOGY, 2007. ICFPT 2007. INTERNATIONAL CONFERE NCE ON, IEEE, PI, 1 December 2007 (2007-12-01), pages 169-176, XP031208387, ISBN: 978-1-4244-1471-0

## Description

### DOMAINE TECHNIQUE

La présente invention se rapporte à un procédé ou à une méthode cryptographique permettant de chiffrer et/ou déchiffrer des messages introduits comme données d'entrée dans un algorithme cryptographique. Ces messages sont introduits conjointement avec une clé utilisée comme paramètre principal d'une opération cryptographique régie par l'algorithme. Plus particulièrement, l'invention a trait à l'utilisation de fonctions physiquement induplicables dans un tel procédé, à savoir à l'utilisation de fonctions que l'on ne peut pas reproduire, copier ou cloner. L'invention concerne également un dispositif cryptographique pour la mise en œuvre d'un tel procédé.

### ART ANTERIEUR

Les fonctions physiquement induplicables (connues en anglais sous l'appellation de « Physically Unclonable Functions » ou PUF en abrégé) sont actuellement à l'étude dans le monde universitaire et le monde industriel en tant que sources d'identificateurs uniques, physiquement liés à des composants électroniques incorporés ou associés à des circuits intégrés. L'idée principale vise à exploiter les variations du processus de fabrication de ces composants qui rendent uniques des organes électroniques (tels que des puces) grâce à leurs propriétés intrinsèques.

Cette technologie repose sur les particularités que possèdent ordinairement tous les processus de fabrication de composants électroniques. Du fait que de tels processus soient imparfaits, ils génèrent malgré eux des différences mineures entre les composants qu'ils fabriquent. En d'autres termes, bien que ces composants soient issus d'une même chaîne de production et produits dans des mêmes conditions, il existe toutefois des différences qui, de façon intrinsèque, personnalisent involontairement ces composants. L'astuce consiste à transformer ces différences, résultant des aléas du processus de fabrication, en une information exploitable ayant pour particularité d'être non prédictible et non reproductible par le processus de fabrication, et ainsi de pouvoir identifier un composant ou un ensemble de composants électroniques parmi d'autres.

Une fonction physiquement induplicable, dénommée ci-après fonction PUF, est une fonction qui tire profit des variations aléatoires propres aux composants d'un circuit intégré en déterminant par des mesures précises, une ou plusieurs grandeurs physiques de ces composants électroniques. Il est ainsi facile de créer une telle fonction PUF mais il est très difficile, voire impossible, de la cloner, par exemple en créant une fonction qui donnerait lieu à un identificateur prédéfini particulier, principalement du fait que la valeur issue d'une telle fonction est impossible à prédire et/ou à reproduire. L'information issue de ces infimes différences peut être représentée par une séquence de bits pseudo-aléatoires. Cette information possède donc toutes les caractéristiques attendues d'un secret qui pourra être avantageusement utilisé à des fins cryptographiques.

La majeure partie des applications envisagées jusqu'ici peuvent être regroupées en trois catégories principales, à savoir la génération de puces identifiables au moyen d'un identifiant unique définit par une telle fonction PUF, l'authentification de puces par un processus faisant intervenir des défis et des réponses associées (de type challenge/response en anglais), ainsi que la génération de clés cryptographiques.

Actuellement, on constate que la majorité des applications se réfèrent à cette dernière catégorie et visent à couvrir des solutions où la valeur de la fonction PUF est utilisée comme clé cryptographique dans des échanges de messages sécurisés. Dans une telle approche, un premier problème réside dans le fait que l'utilisateur n'est pas en mesure de choisir la valeur de la fonction PUF étant donné qu'elle est déterminée pour chaque puce par les caractéristiques intrinsèques de cette dernière. Par conséquent, la clé de l'algorithme devient un élément prédéfini, immuable pour l'utilisateur. Un autre problème réside dans le fait qu'il est peu commode, voire compliqué, d'implémenter un changement de clés dans un système existant, en particulier, dans un système faisant appel à une hiérarchisation de clés qui a déjà été fixée et qui est déjà mise en fonction.

De plus, la valeur de la fonction PUF est une valeur qui ne peut être définie comme immuable que dans des conditions théoriques idéales correspondant à une absence de bruit parasite. Or, dans la réalité, cette valeur fluctue légèrement en fonctions des conditions d'utilisation. Ces fluctuations peuvent typiquement se référer à des variations de température de fonctionnement des composants électroniques ou à de légères variations dans le voltage de leur alimentation. Elles peuvent également découler d'un bruit aléatoire produit par le circuit lui-même (par exemple dans le cas d'un circuit âgé) ou par l'environnement dans lequel il se trouve. Ces instabilités engendrent des réponses erronées, à savoir des réponses qui, dans certaines conditions d'utilisation, ne correspondent plus à celles qui étaient obtenues dans un environnement contrôlé, tel que celui d'une chaîne de production.

Certains fabricants proposent des solutions où les valeurs des clés sont sélectionnables par l'utilisateur final en fonction de messages de configuration. Cependant, comme cet utilisateur final peut modifier de tels messages de configuration, il est ainsi capable de générer facilement de mauvaises clés, ce qui constitue un autre problème des approches actuellement connues.

Le document XP058002607 intitulé «PUF ROKs» de Michael S. Kikpatrick et al., décrit une approche matérielle pour générer clés cryptographiques à lecture unique (ROKs signifiant «Read-Once-Keys» en anglais) à partir d'une application particulière d'une fonction PUF. La notion de clés ROK implique une méthode dans laquelle le processus de lecture de la clé conduit à sa destruction immédiate. Chaque clé est utilisée pour chiffrer un seul message et la nature imprédictible de la fonction PUF permet d'assurer l'unicité de chaque clé ROK. Ce document suggère l'utilisation d'une valeur d'initialisation («seed value») comme donnée d'entrée de la fonction PUF utilisée pour générer une clé cryptographique destinée à chiffrer un message. La réponse donnée par cette fonction PUF est assainie par une unité de correction d'erreur avant d'être utilisée comme clé. La valeur d'initialisation est stockée dans un registre pour pouvoir être réutilisée, une seconde fois seulement, lors d'une opération inverse de déchiffrement du message chiffré. En effet, après la lecture de la valeur d'initialisation dans son registre pour effectuer l'opération de déchiffrement, le contenu de ce registre est effacé par le stockage d'une nouvelle valeur, ce qui confère le caractère de « lecture unique » à la clé cryptographique issue de la fonction PUF.

Le document XP055124564 intitulé «Ring Oscillator Physical Unclonable Function with Multi Level Supply Voltages» de Shohreh Sharif Mansouri et al., décrit une fonction PUF basée sur des oscillateurs RO («ring oscillators»), dans laquelle ces oscillateurs sont alimentées par différentes tensions. Cette nouvelle fonction PUF vise à être utilisée (i) pour augmenter le nombre paires possibles challenge/réponse, (ii) pour générer un nombre élevé de bits tout en occupant une faible surface, et (iii) pour augmenter la fiabilité de la fonction PUF en cas de variations de températures. Ce document, mentionne la problématique de la fiabilité de tous les circuits PUF qui devraient être testés de façon à ce que la clé cryptographique ou l'identifiant unique qui en est dérivé est invariable en toute circonstance. Pour résoudre ce problème, il est suggérer de faire varier la tension d'alimentation du circuit PUF après avoir constaté que les effets des changements de température sur les fréquences des oscillateurs peuvent être partiellement compensés en modifiant la tension d'alimentation.

Le document XP055142523 ("Physically Unclonable Functions: A Study on the State of the Art and Future Research Directions" dans «Towards hardware-Intrinsic Security» de Roel Maes et al.) présente un aperçu détaillé de toutes les fonction PUF connues jusqu'en 2010 afin de tenter d'obtenir une compréhension approfondie de l'état de l'art dans ce domaine. Ce document fait notamment mention de fonction PUF noyées dans un algorithme cryptographique où à aucun moment la clé cryptographique est stockée en mémoire, ni dans une mémoire non-volatile, ni dans une mémoire volatile. Cette manière de faire offre non seulement une parfaite sécurité contre les pirates s'attaquant aux mémoires pour en soutirer des clés, mais en plus empêche de tels pirates d'obtenir des renseignements utiles de tout ordre.

Le document EP 2 081 170 divulgue un dispositif de sécurité qui procure une stabilité et une confidentialité accrue d'une clé issue d'une fonction de hachage. Ce dispositif comprend une unité PUF qui fournit une résistance aux attaques en utilisant des caractéristiques physiques pour générer une clé prédéfinie issue d'une telle fonction de hachage. Il comprend en outre une unité pour stocker des informations de correction d'erreur partielle, une unité de correction de la fonction PUF produisant une information de correction PUF, ainsi que plusieurs autres unités de correction. Il est connu aussi les documents

XP04743048"Protection of Sensitive Security Parameters in Integrated Circuits" de LAZICH DEJAN E ET AL:
XP031208387 "Dynamic Intellectual Property Protection for Reconfigurable Devices" de TIM GUNEYSU ET AL

### BREVE DESCRIPTION DE L'INVENTION

La présente invention vise à remédier au moins en partie aux problèmes précités et propose le recours à une fonction PUF pour rendre l'exécution des algorithmes cryptographiques unique, en les personnalisant de manière à ce qu'ils soient propres à chaque puce ou organe électronique fabriqué.

Pour ce faire, l'invention suggère un procédé cryptographique pour chiffrer /déchiffrer un message d'entrée au moyen d'un algorithme admettant comme données d'entrée ledit message d'entrée, une clé cryptographique et une valeur complémentaire distincte de la clé et utilisée comme paramètre de l'algorithme. Ce procédé produit, en donnée de sortie, le message d'entrée déchiffré/chiffré par l'algorithme au moyen de la clé cryptographique et de la valeur complémentaire.

La valeur complémentaire correspond, à part entière, à une des entrées de l'algorithme cryptographique et, au sein de la communauté cryptographique, est plus connue sous le vocable anglais de « tweak ». Elle permet d'affiner l'algorithme en modifiant légèrement ce dernier et en obtenant, par conséquent, une réponse légèrement différente en donnée de sortie. A l'opposé, l'introduction d'une clé modifiée induit en revanche de profonds changements sur la valeur obtenue en sortie de l'algorithme.

Selon l'invention, cette valeur complémentaire est déterminée sur la base d'une valeur unique physiquement liée à un organe électronique par l'intermédiaire d'une fonction physiquement induplicable (PUF) qui est inhérente à cet organe. Cette fonction PUF est utilisée pour générer cette valeur unique à partir d'une pluralité de mesures physiques effectuées sur des composants intégrés dans l'organe électronique. Avantageusement, le procédé cryptographique de la présente invention permet, sans imposer de clé cryptographique ni influencer son choix, de réaliser des opérations cryptographiques au moyen d'un algorithme qui est personnalisé par une fonction liée physiquement à un support matériel, typiquement à un circuit intégré duquel la fonction PUF est générée.

Dans un mode de réalisation préféré, la fonction PUF est paramétrée par une donnée de consigne qui, lors d'une opération initiale de configuration, permet de personnaliser davantage l'organe électronique hébergeant la fonction PUF, en sélectionnant les composants qui sont à la base de cette fonction. En d'autres termes, cette donnée de consigne permet de choisir, parmi la totalité des composants électroniques à disposition sur un circuit intégré, un sous-ensemble de composants électroniques sur lesquels seront effectuées les mesures d'une ou plusieurs grandeurs physiques. En variante, cette données de consigne pourrait permettre de sélectionner un sous ensemble de mesures, effectuées sur tout ou partie des composants électroniques, en fonction de ces composants, notamment sur la base de leur identifiant. De préférence, cette donnée de consigne permet en outre de déterminer comment les composants électroniques choisis doivent être combinés ensemble pour générer la valeur unique de la fonction PUF.

Avantageusement, une sélection judicieuse offerte par ce choix permet de s'affranchir autant que possible des fluctuations dues aux conditions variables d'utilisation, et de stabiliser ainsi la réponse donnée par la fonction PUF. Ainsi l'administrateur légitime de l'organe électronique, à savoir le gestionnaire qui contrôle la création de l'organe électronique et plus généralement la puce ou la carte électronique du module cryptographique, aura la liberté de choisir (même dynamiquement) la valeur de la fonction PUF qui sera utilisée comme paramètre dans l'algorithme cryptographique. Ce contrôle peut être obtenu grâce à l'introduction d'un message de consigne (donnée de consigne), lequel sera pris en compte à chaque fois que doit être générée la valeur unique découlant de la fonction PUF.

D'autres avantages et modes de réalisation seront également présentés dans la description détaillée qui va suivre.

### BREVE DESCRIPTION DES FIGURES

L'invention sera mieux comprise grâce aux dessins schématiques annexés, donnés à titre d'exemples nullement limitatifs, dans lesquels :
La figure 1 est une représentation schématique d'une organe électronique, typiquement un circuit intégré, qui exploite une fonction physiquement induplicable (PUF).
La figure 2 est une illustration d'un premier mode de réalisation du procédé faisant l'objet de la présente invention.
La figure 3 est une représentation schématique de l'organe électronique de la figure 1 selon un second mode de réalisation amélioré.
La figure 4 est une représentation de quatre étapes successives A) à D) effectuées selon un troisième mode de réalisation du procédé mis en œuvre au moyen de l'organe électronique illustré à la figure 3.
La figure 5 est une représentation schématique d'un quatrième mode de réalisation du procédé de la présente invention.
La figure 6 est une variante du procédé de la figure 5 conformément à une représentation partielle du procédé de l'invention.
La figure 7 donne une représentation schématique d'un mode de réalisation du dispositif cryptographique correspondant au second objet de la présente invention.

### EXPOSE DE L'INVENTION

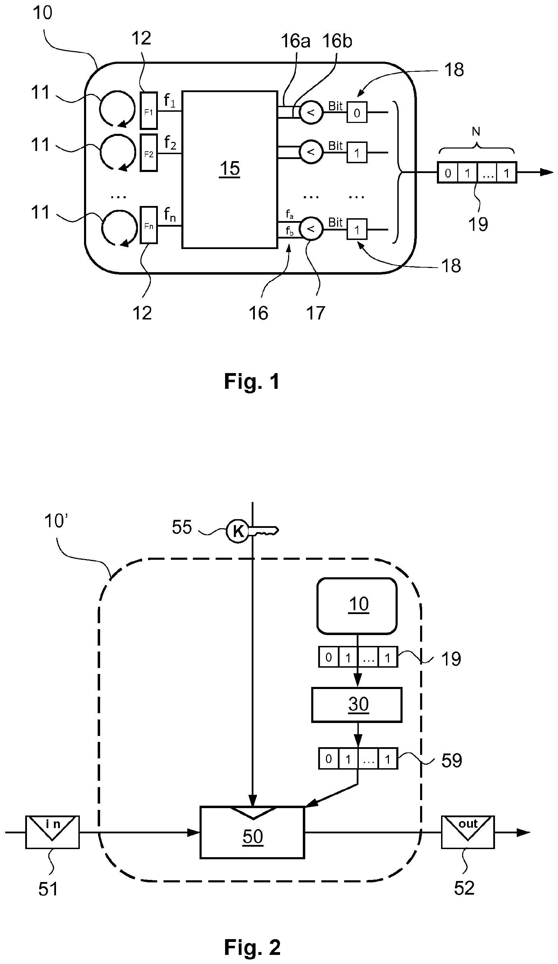

En référence à la figure 1, celle-ci représente un organe électronique 10, pouvant être typiquement un circuit intégré, une puce électronique ou une partie d'une puce. Cet organe 10 comprend plusieurs éléments électroniques, parmi lesquels se trouvent une pluralité de composants 11 utilisés comme éléments sources pour fournir des mesures utiles à la création d'une fonction physiquement induplicable, dite fonction PUF. Comme schématiquement représentés sur cette figure, ces composants 11 sont constitués par exemple d'oscillateurs distincts dont le nombre est typiquement voisin de plusieurs dizaines. Ces oscillateurs 11 sont chacun couplés à un organe de mesure 12 destinés à déterminer une valeur physique propre à chaque oscillateur. Dans le cas présent, les organes de mesure 12 sont aptes à mesurer avec précision les fréquences f des oscillateurs pour lesquels ils sont dédiés. Bien que dans la suite de l'exposé on se référera essentiellement à des oscillateurs comme exemples de composants 11, il est clair que ce mode de réalisation n'est nullement limitatif et que l'on pourrait utiliser d'autres composants 11, desquels d'autres grandeurs physiques pourraient être mesurées, telles que le courant, la tension, la puissance, la résistance, la température, le temps, l'intensité lumineuse, etc...

En première approche on peut considérer que les oscillateurs qui composent l'organe électronique 10 sont identiques et ne diffèrent pas d'un organe 10 à l'autre, notamment si ceux-ci sont issus d'une même chaîne de fabrication. Toutefois, en seconde approche on peut constater que chaque oscillateur possède une fréquence qui lui est propre et que les fréquences de tous les oscillateurs ne sont pas exactement identiques mais qu'elles fluctuent légèrement d'un à l'autre. Au niveau des technologies submicroniques profondes, la faible variation de la fréquence au sein d'oscillateurs de même type produits par un même processus de fabrication sur une ou plusieurs chaînes de production identiques est suffisante pour que l'on puisse créer une fonction physiquement induplicable. Cette fonction PUF va donc tirer parti du fait que chaque oscillateur possède une fréquence intrinsèque qui essentiellement résulte des faibles variations auxquelles il a été soumis en cours de fabrication.

Les valeurs f₁, f₂, ... fₙ mesurées par les organes 12 de la figure 1 sont acheminées à une unité centrale 15 qui, en fonction de paramètres prédéfinis, est à même de les regrouper par paires et de diriger chacune de ces paires vers deux sorties 16 particulières de l'unité centrale. Pour ce faire, ces sorties 16 sont également regroupées par paires de sorties 16a, 16b, chacune de ces paires menant finalement une paire de valeurs mesurées (fₐ, f_{b}) à un comparateur 17, schématisé ici à l'extérieur de l'unité centrale 15.

Chaque comparateur 17 a pour but de déterminer laquelle des sorties 16a, 16b, parmi celles qui lui sont associées, véhicule la mesure la plus élevée ou la plus faible. En réponse, le comparateur 17 produira à sa sortie, une valeur binaire élémentaire 18 qui typiquement sera un bit 1 ou 0. Cette valeur binaire élémentaire pourra être équivalente au bit 0 dans le cas où, par exemple, la valeur mesurée qui est acheminée par la sortie 16a est inférieure à celle qui est acheminée via la sortie 16b. A l'inverse, si la valeur issue de la sortie 16a est supérieure à celle de la sortie 16b, le comparateur 17 produira alors une valeur binaire élémentaire 18 correspondant au bit 1.

La séquence de toutes les valeurs binaires élémentaires produites par la succession ordonnées des comparateurs 17 constituera une valeur unique 19, pouvant être également dénommée valeur PUF en référence à la fonction du même nom qui produit cette valeur. Cette valeur est unique car elle est propre à l'organe électronique 10. De plus, elle est physiquement liée à cet organe 10 car elle est issue de mesures d'une ou plusieurs grandeurs physiques des composants de cet organe. Du fait que cette valeur unique soit composée de toutes les valeurs binaires élémentaires 18 et que ces dernières soient notamment caractéristiques des propriétés physiques des oscillateurs 11, alors ladite valeur unique 19 issue de l'organe électronique 10 est une valeur qui est comparable à une sorte d'empreinte digitale ou une signature propre à l'organe électronique 10.

La figure 2 donne une illustration schématique d'un premier mode de réalisation du procédé de la présente invention. On retrouve sur cette figure l'organe électronique 10 qui peut être une des parties d'un ensemble d'éléments constituant par exemple un module cryptographique 10'. A cet effet, ce module intègre également des moyens pour mettre en œuvre un algorithme cryptographique 50, pour recevoir un message d'entrée 51 à chiffrer ou déchiffrer, pour recevoir une clé cryptographique 55 utile à l'algorithme 50 et pour émettre en réponse un message de sortie 52 correspondant à la transformation (chiffrage/déchiffrage) du message d'entrée 51 par l'algorithme 50.

Selon l'invention et comme illustré sur cette figure, l'algorithme 50 n'est pas simplement paramétré par la clé 55 mais admet également comme donnée d'entrée une valeur complémentaire 59 qui est utilisée comme second paramètre de l'algorithme 50. Avantageusement, la clé 55 n'est pas affectée par cette valeur complémentaire, mais seul l'algorithme 50 de base, qui pourrait être commun à un grand nombre de module cryptographique 10', sera modifié par la valeur complémentaire en le personnalisant. Cette valeur complémentaire 59 a comme particularité d'être déterminée sur la base de la valeur unique 19, à savoir d'être calculée en fonction d'une valeur qui est non seulement unique mais qui en plus est physiquement liée à l'organe électronique 10. La dépendance physique entre cette valeur et l'organe électronique 10 résulte de la fonction PUF mise en œuvre par cet organe 10 pour générer cette valeur unique 19 à partir d'une pluralité de mesures physique f₁, f₂, ... fₙ, effectuées sur les composants 11 de cet organe.

Avantageusement, lorsqu'elle est exploitée en tant que paramètre d'un algorithme cryptographique, cette liaison physique permet d'obtenir une réponse 52 qui est fonction de l'association entre l'organe électronique 10 et le hardware qui héberge l'algorithme 50. Ainsi, si l'algorithme 50 est mis en œuvre sur un premier support matériel et que la valeur unique 19 est issue d'un second support matériel, alors seule la réunion de ces deux supports permettra par exemple de déchiffrer correctement un message d'entrée 51 au moyen d'un algorithme 50 paramétré non seulement par une clé 55 mais également par une valeur complémentaire 59 déterminée sur la base de la valeur unique issue du second support matériel. Dans une telle configuration, l'organe électronique 10 sera typiquement dissociable du module cryptographique 10' ou du reste de ce module, en particulier l'organe électronique 10 pourrait être un organe amovible indépendant, apte à être associé au module cryptographique 10'.

Comme illustré sur la figure 2, la valeur complémentaire 59 est délivrée à l'algorithme 50 par un module intermédiaire 30 qui, dans un mode de réalisation simplifié, ne fait qu'attribuer la valeur unique 19 à la valeur complémentaire 59, de manière à ce que cette dernière corresponde simplement à la valeur unique 19 issue de l'organe électronique 10.

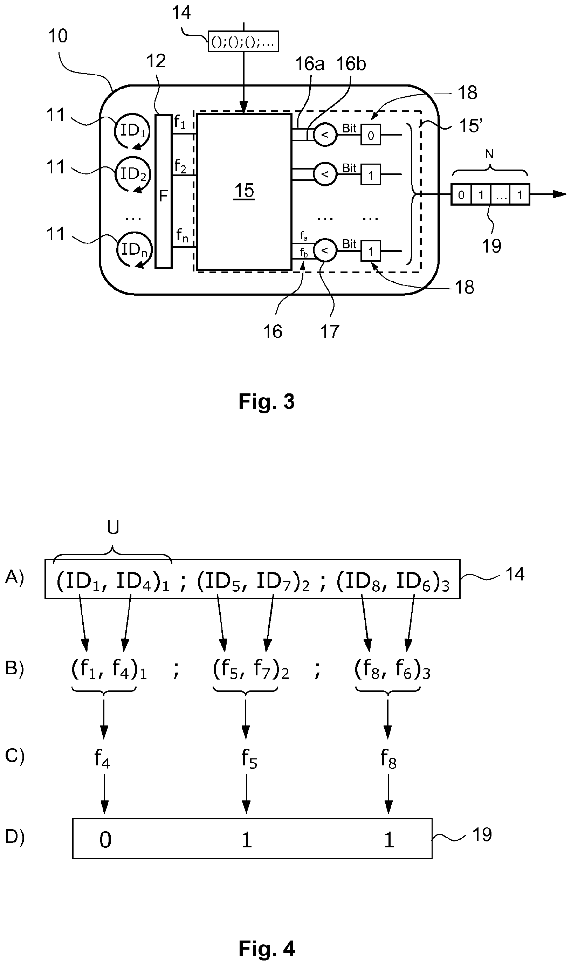

En référence à la figure 3, celle-ci donne une représentation schématique de l'organe électronique de la figure 1 selon un second mode de réalisation amélioré par la présente invention. On remarquera tout d'abord sur cette figure que plusieurs oscillateurs 11 peuvent être reliés à un même organe de mesure 12, de manière à partager un organe de mesure 12 entre plusieurs composants 11, voire avec tous les composants 11. En sortie de l'unité centrale 15, il serait également possible de se contenter d'un nombre restreint de comparateurs 17, voire que d'un seul comparateur, pour traiter plusieurs paires de valeurs mesurées. De plus et comme représenté par le trait interrompu repéré par le numéro de référence 15', le ou les comparateurs 17 pourraient être intégrés à l'unité centrale 15, par exemple sous forme de fonctions logiques. Dans ce cas, la valeur unique 19 serait directement issue de l'unité centrale 15'.

Aussi, on remarquera qu'à chaque composant 11 est associé un identifiant, noté ID₁, ID₂, ... IDₙ qui permet de désigner chaque composant 11 parmi l'ensemble des composants 11 que comporte l'organe électronique 10. Enfin, selon ce mode de réalisation, la fonction PUF est paramétrable par une donnée de consigne 14 qui, comme illustré dans la figure 3, sera de préférence introduite comme paramètre dans l'unité centrale 15, par exemple via une interface dédiée à cet effet. Cette donnée de consigne 14 vise à personnaliser l'organe électronique 10, en particulier la fonction PUF qui est contrôlée par l'unité centrale 15, lors d'une opération préalable de configuration de l'organe électronique. Une telle opération sera typiquement effectuée initialement au moment de la personnalisation de l'organe 10 par un gestionnaire ou un administrateur, lequel intervient dans ce but préalablement à l'utilisation de cet organe par un utilisateur final dans le mode opératoire normal pour lequel il est avant tout destiné. Cette personnalisation permet de sélectionner quels sont les composants 11 sur lesquels devront être effectuées les mesures physiques f₁, f₂, ...fₙ et de déterminer comment grouper ces dernières, à savoir par paire, par triplet ou plus généralement par n-uplets, pour que soit déduite de chaque n-uplet une valeur élémentaire en réponse d'une comparaison effectuée entre les valeurs mesurées qu'il contient.

Avantageusement, la donnée de consigne permet donc de choisir les composants 11 qui devront être pris en compte par la fonction PUF pour générer la valeur unique 19 ou de sélectionner des valeurs mesurées f₁, f₂, fₙ en fonction des composants 11 desquels ces valeurs sont issues. De ce fait, seule une partie de l'ensemble des composants 11 que comporte l'organe électronique 10 peuvent être pris en considération par cette fonction. De plus, cette valeur de consigne 14 permet également de déterminer et de choisir comment doivent être combinées les valeurs mesurées par le ou les organes 12 pour que soient formées les paires 16a, 16b (prises ici en exemple de n-uplets) introduites chacune dans un comparateur 17. Enfin, il est à remarquer que la donnée de consigne 14 peut encore définir quel est le nombre de valeurs mesurées à prendre en compte lors de chaque opération de comparaison effectuée par un comparateur 17. Ainsi, de tels comparaisons ne se limitent plus à des paires de données, à savoir à des données prises deux par deux mais pourraient également porter sur des groupes de trois ou quatre mesures, voire plus, formant respectivement des triplets, des quadruplets ou plus généralement des n-uplets. La formation de ces n-uplets est décrite ci-après en référence à la figure 4.

La figure 4 est une représentation de quatre étapes successives, notées A à D, qui sont effectuées selon un mode de réalisation préféré du procédé mis en œuvre par l'organe électronique de la figure 3. En référence à la première étape A est représentée d'une façon plus explicite un exemple de contenu inclus dans la donnée de consigne 14. On remarque que cette dernière comprend une collection de n-uplets notés U, que ces derniers sont indexés et contiennent chacun une pluralité d'identifiants ID1,... IDn ordonnés. En référence par exemple au premier n-uplet (ID₁, ID₄)₁, on notera que l'ordre des identifiants revêt une certaine importance, du fait qu'une paire notée (ID₄, ID₁) produira une réponse inverse de celle issue de la paire (ID₁, ID₄). En revanche, si les n-uplets sont indexés au moyen d'un chiffre d'index, comme le chiffre 2 dans la paire (ID₅, ID₇)₂, il importe peu que ces n-uplets soient ordonnés entre eux. Au contraire, si les n-uplets ne comportent pas expressément de chiffre d'index, l'index par défaut associé à chaque n-uplet de la donnée de consigne sera celui de sa position dans la collection, relativement aux autres n-uplets. Aussi et comme illustré dans cette figure 4, on remarquera que les identifiants des composants de l'organe électronique 10 ne sont pas nécessairement tous considérés, mais qu'une partie au moins de ces identifiants est prise en compte et figure dans la donnée de consigne 14. Ainsi, bien que l'organe électronique 10 puisse intégrer un grand nombre d'oscillateurs 11, il n'est toutefois pas nécessaire que tous ces oscillateurs soient pris en compte pour obtenir, en réponse de la fonction PUF, une valeur unique à la sortie de l'organe 10. Enfin, bien que les n-uplets U dans cette figure soient formés de paires d'identifiants, on notera que n'importe quel n-uplet de la donnée de consigne pourrait comprendre davantage d'identifiants.

Les étapes A à D de la figure 4 illustrent schématiquement la manière dont la valeur unique 19 est obtenue à partir de la donnée de consigne 14. La première étape A consiste à lire cette donnée de consigne. Cette lecture permet de reconnaître les n-uplets U, de connaître leur nombre ainsi que l'index associé à chacun d'eux. En outre, cette lecture permet d'en faire de même pour ce qui est des identifiants compris dans chaque n-uplet.

La seconde étape B vise tout d'abord à effectuer ou obtenir, pour chaque identifiant de chaque n-uplet U, une mesure d'une grandeur physique dudit composant 11 auquel est associé cet identifiant. Puis, cette étape vise à former respectivement, en correspondance de la première collection de n-uplets, une seconde collection de n-uplets indexés (de préférence par les mêmes index que ceux de la première collection), contenant lesdites mesures ainsi effectuées. En exemple avec le premier n-uplet de la valeur de consigne 14, on formera en correspondance un n-uplet qui portera le même index, à savoir le chiffre 1, et qui contiendra premièrement la valeur mesurée f₁, effectuée par un organe de mesure 12 sur le composant 11 auquel est associé l'identifiant ID₁, et deuxièmement la valeur mesurée f₄, effectuée par un organe de mesure 12 sur le composant 11 auquel est associé l'identifiant ID₄.

La troisième étape C se réfère uniquement aux n-uplets de la seconde collection et consiste, pour chaque n-uplet de cette seconde collection, à identifier la mesure physique qui est la plus extrême et à associer à ce n-uplet une valeur élémentaire (typiquement un bit) en fonction de l'ordre de la valeur extrême dans ce n-uplet. Cet ordre fait référence à l'ordre dans lequel les valeurs mesurées sont positionnées dans le n-uplet. Dans l'exemple illustré à la figure 4, on cherchera par exemple à déterminer comme valeur extrême, la valeur la plus grande parmi toutes les valeurs mesurées qui font partie d'un même n-uplet. Selon cette condition, il ressort par exemple que la valeur la plus grande entre les mesures f₁ et f₄ du n-uplet d'index 1 est f₄. Pour ce qui est des second et troisième n-uplet de cet exemple, les valeurs extrêmes sont respectivement f₅ et f₈. Bien sûr, on aurait aussi pu considérer la valeur la plus faible comme étant la valeur extrême déterminante. Une fois que la valeur extrême au sein d'un n-uplet a été identifiée, on associe à cet n-uplet une valeur élémentaire, en l'occurrence un bit 1 ou 0 en fonction de la position occupée par cette valeur extrême dans ce n-uplet. Toujours selon l'exemple de la figure 4, il a été choisi de considérer que si la valeur la plus extrême se situe en première position au sein du n-uplet, alors la valeur élémentaire associée à ce n-uplet sera un 1 et dans le cas contraire un 0. Ainsi, comme les valeurs les plus extrêmes sont f4, f5 et f8 pour les n-uplets respectifs de premier, de second et de troisième index, et comme seule la valeur f4 est située en seconde position au sein de son n-uplet, alors les valeurs élémentaires associées à ces trois n-uplets sont respectivement 0, 1 et 1.

La quatrième étape D consiste à combiner (par exemple à concaténer) successivement lesdites valeurs élémentaires, en fonction des index des n-uplets auxquels ces valeurs élémentaires sont associées, pour obtenir au final la valeur unique 19. Dans l'exemple de la figure 4, la valeur unique 19, qui découle des valeurs élémentaires ordonnées en fonction des index des n-uplets associés, est la valeur binaire 011 comportant trois bits. Si chaque valeur élémentaire est une valeur à un bit (ce qui toutefois n'est pas une obligation), alors le nombre de bits N qui constituera la valeur unique 19 correspondra au nombre de réponses obtenues en sortie du ou des comparateurs 17 à l'issue du processus mené dans l'unité centrale 15.

D'un point de vue conceptuel et dans le cas où l'organe électronique 10 comporte un nombre de comparateurs 17 égal ou supérieur au nombre de valeurs élémentaires que doit comprendre la valeur unique 19, l'ordonnancement des n-uplets contenus dans la donnée de consigne 14 sera respecté par l'unité centrale 15 en ses sorties 16, de sorte que, par exemple, le premier n-uplet (n-uplet d'index 1) de la seconde collection sera dirigé vers les premières sorties 16a, 16b menant au premier comparateur 17, le second n-uplet (n-uplet d'index 2) de cette même collection sera dirigé vers les secondes sorties 16a, 16b menant au second comparateur, et ainsi de suite pour tous les n-uplets de la seconde collection. En variante et notamment dans le cas où l'organe électronique 10 comporte moins de comparateurs 17 que mentionné ci-avant, l'unité centrale 15 veillera à délivrer les n-uplets, en ses sorties 16, successivement dans l'ordre de leur index de façon à ce qu'ils puissent être traités dans le même ordre par le ou les comparateurs 17 afin d'obtenir une valeur unique 19 formée d'une succession ordonnée de valeurs élémentaires.

Comme évoqué plus haut en référence à l'opération initiale de personnalisation, le choix des n-uplets de la première collection qui identifient les oscillateurs 11 peut être fait en amont d'un mode normal d'utilisation, typiquement durant un mode de configuration durant lequel la donnée de consigne 14 sera définie. Durant ce mode de configuration, l'administrateur ou le gestionnaire de la donnée de consigne aura la possibilité de lire toutes les valeurs des mesures effectuées sur les oscillateurs 11 par l'intermédiaire d'un ou de plusieurs organes de mesure 12. Avantageusement, la présente invention permet dans cette phase de configuration de sélectionner quels sont les identifiants des oscillateurs qu'il convient de grouper par n-uplets, de manière à pouvoir garantir l'obtention d'une réponse aussi constante que possible lors de la considération des n-uplets correspondant dans la seconde collection.

Le choix des identifiants des oscillateurs 11 dans chaque n-uplet est un choix empirique qui va essentiellement dépendre de statistiques. Ces dernières permettront d'identifier les n-uplets desquels apparaît une différence satisfaisante au niveau des fréquences de manière à pouvoir tolérer autant que possible un bruit résiduel. Une telle différence peut être mise en évidence durant le mode de configuration vu que ce mode autorise la lecture de toutes les valeurs des mesures effectuées sur l'ensemble des oscillateurs 11. L'accès à ce mode de configuration est de préférence protégé. Ainsi, pour pouvoir entrer dans ce mode, l'administrateur devra par exemple signer un message particulier ou fournir un mot de passe. En variante, il pourrait être également possible de bloquer définitivement l'accès au mode de configuration dès que l'administrateur le quitte après son premier accès. Dans pareil cas, le mode de configuration ne serait donc accessible qu'une seule fois, ce qui augmente davantage la protection du dispositif électronique 10.

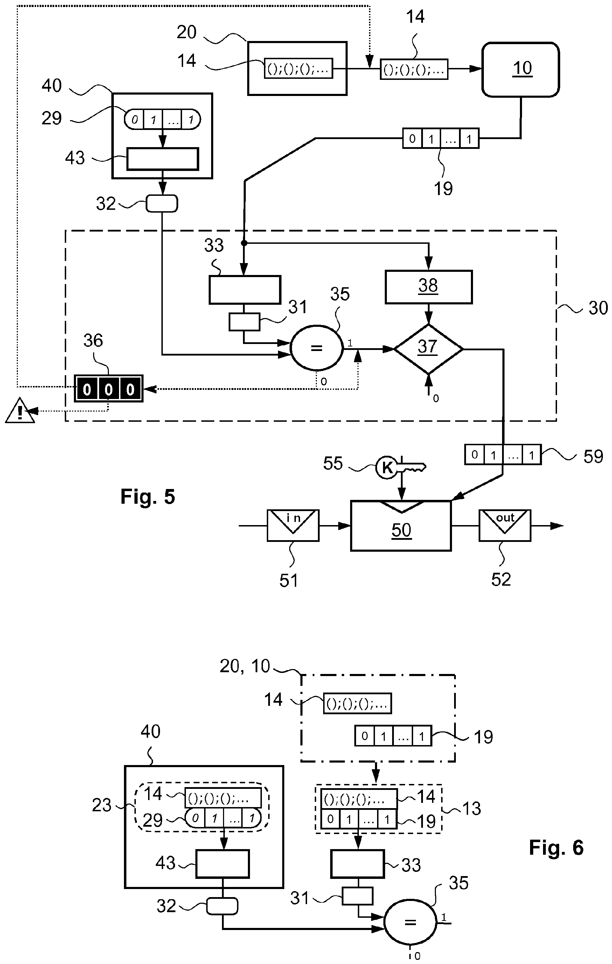

La figure 5 illustre un autre mode de réalisation plus complexe que celui de la figure 2 et qui, comme celui de cette dernière figure, se réfère au mode normal d'utilisation accessible à l'utilisateur final, par opposition au mode de configuration qui est réservé à l'administrateur ou au gestionnaire des organes électroniques 10.

Sur cette figure 5, on reconnaît les éléments illustrés à la figure 2 auxquels ont été ajoutés, d'une part, une première source de données 20 située de préférence dans l'environnement de l'utilisateur et, d'autre part, une seconde source de données 40 située dans un environnement extérieur à celui de l'utilisateur. Un tel environnement externe peut être celui d'un fournisseur de services, tel qu'un provider diffusant des données d'entrées 51 à déchiffrer. La première source 20 fournit la valeur de consigne 14 à l'organe électronique 10. La seconde source 40 contient une valeur attendue de référence 29.

La valeur attendue de référence 29 est la valeur à laquelle la valeur unique 19 doit normalement correspondre. Cette valeur de référence 29 est donc la valeur la plus probable que l'on recevra en sortie de l'organe électronique 10, dans des conditions normales d'utilisation. La valeur attendue de référence 29 est de préférence déterminée par avance dans des conditions stables. Ces dernières peuvent être définies par le fabricant et sont celles qui garantissent de pouvoir retrouver autant de fois que possible la même valeur unique 19 lors de réitérations successives de la fonction PUF dans l'organe électronique 10. La valeur attendue de référence 29 est donc celle qui, dans des conditions normales, sera obtenue dans la quasi-totalité des itérations. Grâce à la donnée de consigne 14 qui permet à l'administrateur de choisir judicieusement les identifiants des composants 11 de chaque n-uplet, il est possible d'améliorer la stabilité de la valeur unique 19 en sortie de l'organe électronique 10 et ainsi d'accroître la plage des conditions normales d'utilisation que cet organe est à même de tolérer. Cependant, on ne peut exclure la formation d'une valeur unique 19 différente de celle qui est normalement attendue en sortie de l'organe électronique 10. Ce cas peut en effet se produire par simple basculement d'une valeur binaire élémentaire à l'autre, typiquement lorsque qu'un bit 18 saute de la valeur 0 à la valeur 1 ou inversement, par exemple à la suite d'un excès ponctuel de bruit.

De façon schématique, la première source de données 20 intègre donc la valeur de consigne 14 (ou les données qui permettent de la déterminer) qui a été définie durant le mode de configuration de l'organe électronique 10 et qui sera utilisée durant le mode d'utilisation normal par l'utilisateur final. De façon plus concrète, la première source de données 20 peut consister en un organe de stockage, ou un organe de distribution externe, duquel l'organe électronique 10 lira ou obtiendra la valeur de consigne 14. L'organe de stockage peut être connecté à l'organe électronique 10 ou être logé directement au sein de ce dernier. Dans ce dernier cas, l'organe de stockage peut être une mémoire flash ou une mémoire d'accès protégé, voire une mémoire associée de manière monolithique à une puce électronique, par exemple à l'organe électronique 10. Le choix entre ces différents types de mémoire peut dépendre des données s'y trouvant stockées, en particulier de leur nature confidentielle ou non. Typiquement, la valeur de consigne 14 pourrait correspondre à une donnée confidentielle, en particulier si elle ne se trouve pas sous une forme brouillée, codée ou combinée, mais qu'est mémorisée telle qu'elle. Enfin, l'organe de distribution peut être un fournisseur de données auquel l'organe de stockage et/ou l'organe électronique 10 peuvent se connecter par une liaison filaire ou par une liaison sans fil de tout type (réseau téléphonique mobile, Wi-Fi, Bluetooth, NFC, etc...). Ce fournisseur de données peut être le même que le fournisseur de services évoqué plus haut.

Toujours en référence à l'illustration donnée par la figure 5, on remarque que l'organe électronique 10 produit la valeur unique 19 comme expliqué en référence aux figures précédentes. Cette valeur unique est introduite dans le module intermédiaire 30 en charge de délivrer la valeur complémentaire 59. Ce module intermédiaire 30 comprend au moins un organe de comparaison 35, pouvant être précédé d'un organe de transformation 33. En option, l'organe intermédiaire 30 peut notamment inclure en outre un compteur d'itérations 36. Comme représenté à la figure 5, la valeur unique 19 est introduite dans l'organe de transformation 33. Au moyen d'une fonction et sur la base de cette valeur d'entrée, l'organe de transformation produit une première donnée 31. La première donnée 31 découle au moins de la valeur unique 19, à savoir qu'elle est dérivée ou est fonction de cette valeur 19 au moins. La seconde source de données 40 produit quant à elle une seconde donnée 32 sur le même principe, à savoir sur la base de la valeur attendue de référence 29 et d'un second organe de transformation 43 qui produit la même transformation que celle effectuée par le premier organe de transformation 33. La seconde donnée 32 est utilisée comme donnée de référence pour contrôler la première donnée 31.

La fonction appliquée dans les organes de transformation 33, 43 ne fait que produire une transformation de la ou des valeurs d'entrée (à savoir au moins de la valeur 19, respectivement 29). Du côté de la seconde source de données 40, cette transformation a pour but de sécuriser la valeur attendue de référence 29 afin que celle-ci reste secrète et ne soit pas transmise telle quelle entre l'environnement du fournisseur et l'environnement de l'utilisateur. Cette transformation vise également à garantir l'intégrité de la valeur attendue de référence 29. Dans un mode de réalisation préféré, on pourrait procéder de la même manière entre l'organe électronique 10 et le module intermédiaire 30 pour éviter que la valeur unique 19 soit transmise telle quelle entre ces deux organes. Cela pourrait être obtenu en déplaçant le premier organe de transformation 33 dans l'organe électronique 10, de manière à ce que ce dernier fournisse la première donnée 31 à sa sortie (au lieu de fournir la valeur unique 19). Cette première donnée 31 serait alors acheminée, tout comme la seconde donnée 32, vers le module intermédiaire 30, en particulier vers l'organe de comparaison 35 de ce module.

Au moyen de l'organe de comparaison 35, le module intermédiaire 30 détermine ensuite si la première donnée 31 est identique à la seconde donnée 32. Ce test permet de contrôler la valeur unique 19 produite par la l'organe électronique 10. Si la comparaison montre que la premier donnée diffère de la seconde, alors soit la donnée de consigne 14 employée par l'organe électronique 10 lors du mode normal d'utilisation diffère de celle qui avait été définie pour cette organe lors du mode de configuration, soit le processus mettant en œuvrela fonction PUF au sein de l'organe électronique 10 a souffert d'un bruit ponctuel ayant conduit par exemple à inverser au moins un bit 18 et à produire par conséquence une valeur unique 19 erronées. Dans le premier cas, il se pourrait que l'organe électronique 10 ne soit pas l'organe électronique d'origine ou, plus simplement, ne soit pas le bon organe électronique auquel est associée la valeur attendue de référence 29 en question. Dans le second cas, le procédé pourrait être configuré pour qu'une nouvelle valeur unique 19 puisse être générée par une voie itérative (illustrée en pointillé sur la figure 2), de préférence en passant par un compteur d'itérations 36. Ainsi, un nombre limité de réitérations résultant d'une comparaison produisant une issue négative en sortie de l'organe de comparaison 35 pourrait être prévu avant que le procédé ne se bloque, génère un message d'alerte, délivre définitivement une réponse négative, ou entreprenne une autre action particulière (action imagée dans la figure 5 par un triangle pourvu d'un point d'exclamation).

En fonction du résultat, positif ou négatif, issu de l'organe de comparaison 35, le module intermédiaire 30 va délivrer une valeur complémentaire 59 qui pourra respectivement soit correspondre à la valeur unique 19 ou à une valeur dérivée, soit renfermer une valeur différente assimilable à une réponse erronée, par exemple une valeur par défaut telle que zéro. Dans la première alternative, l'algorithme 50 sera à même d'effectuer une opération cryptographique produisant en réponse une donnée de sortie 52 correcte (pour autant que la clé 55 soit bien sûr également correcte), alors que dans la seconde alternative cette donnée de sortie 52 ne pourra être qu'incorrecte.

La génération de la valeur complémentaire 59 à partir de l'information transmise par l'organe de comparaison 35 peut être réalisée de plusieurs manières. L'une d'entre elles consiste à transmettre le résultat, positif ou négatif, de la comparaison à un organe de sélection 37, par exemple par la transmission d'un bit de valeur 1, respectivement de valeur 0. En fonction de la réponse reçue de l'organe de comparaison 35, l'organe de sélection 37 sera à même de sélectionner s'il convient de délivrer à l'algorithme 50 (via la valeur complémentaire 59) une valeur correcte ou une valeur erronée telle qu'une valeur par défaut, voire une valeur aléatoire (dans la mesure ou la valeur aléatoire est également différente de la valeur unique 19). Pour ce faire, l'organe de sélection 37 peut par exemple soit libérer la valeur unique 19 stockée dans un registre 38 lors de son introduction dans le module intermédiaire 30, soit libérer en remplacement de cette valeur unique une valeur erronée (correspondant à la valeur par défaut 0 dans figure 5).

La figure 6 illustre une variante du mode de réalisation représenté à la figure 5. Selon cette variante, la première donnée 31 et la seconde donnée 32 intègrent en outre chacune la donnée de consigne 14. La fonction effectuée par les organes de transformation 33, 43 aura donc pour but de produire une donnée 31, 32 basée sur la combinaison de la valeur unique 19 et de la donnée de consigne 14, respectivement de la valeur attendue de référence 29 et de cette même valeur de consigne 14. La combinaison en question peut par exemple correspondre à une concaténation de ces valeurs ou à une autre combinaison plus complexe. Elle peut également être réalisée par l'intermédiaire d'une fonction qui accepte la valeur 19, 29 et la donnée de consigne 14 comme paramètres de cette fonction. Cette combinaison sera effectuée de la même manière de part et d'autre, à savoir dans l'environnement du fournisseur et celui de l'utilisateur. Comme illustré sur la figure 6, les données introduites en entrée dans chacun des organes de transformation 33, 43 peuvent consister en un premier ensemble de données 13, respectivement en un second ensemble de données 23. Le premier ensemble 13 sera formé par la valeur unique 19, issue de l'organe électronique 10, et par la donnée de consigne 14, issue soit de la source de données 20, soit également de l'organe électronique 10. Les données de chacun de ces ensembles peuvent être déjà combinées pour autant que cette combinaison soit réalisée de la même manière pour chaque ensemble. En variante, le premier organe de transformation 33 pourrait également se trouver au sein de l'organe électronique 10, pour les mêmes raisons que celles mentionnées précédemment en référence à la figure 5. Dans ce cas, la première donnée 31 serait issue directement de l'organe électronique 10.

Selon un mode d'exécution préféré, la fonction appliquée par chacun des organes de transformation 33, 43 sera une fonction de hachage. Ainsi, les première et seconde données 31, 32 correspondront chacune à un condensé résultant de la fonction de hachage appliquée respectivement au premier et au second ensemble de données 13, 23. Une telle fonction de hachage est également applicable au mode de réalisation précédent dans lequel seules la valeur unique 19 et la valeur attendue de référence 29 sont entrées dans l'organe de transformation 33, 43 respectif. En variante d'une telle fonction de hachage, on pourrait également sécuriser les données sensibles (19, 20, 14) au moyen d'une autre fonction faisant par exemple intervenir un nombre aléatoire. Un tel nombre aléatoire serait alors partagé de part et d'autre par les organes de transformation 33, 43 de façon à ce que chacun de ces organes de transformation puisse reproduire cette fonction avec le même nombre aléatoire. Quelle que soit la fonction utilisée (fonction de hachage, fonction faisant intervenir une valeur aléatoire ou autre fonction de transformation), cette dernière permet de garantir non seulement la confidentialité mais également l'intégrité des données sensibles sur qui elle est appliquée.

Grâce à la donnée de consigne 14 qui permet de sélectionner, par un choix judicieux, quels sont les composants 11 qu'il convient au mieux de considérer lors de la comparaison des valeurs mesurées f₁, f₂, ...fₙ correspondantes, il est possible d'accroître significativement la fiabilité de la valeur unique 19 obtenue en sortie de l'organe électronique 10. En conséquence, il devient également possible de s'affranchir de tout processus de correction d'erreur (bien connu de l'art antérieur) qui, en revanche, constitue une étape nécessaire dans le cas où la réponse de la puce, qui fait appelle à la fonction PUF, n'est pas suffisamment stable et manque alors de fiabilité. Avantageusement, l'opération de comparaison effectuée par l'organe 35, grâce à la donnée de référence 32, contribue avantageusement à la fiabilité du procédé.

Par ailleurs, la donnée de consigne 14 pourrait également être utilisée dans le but de mieux garantir l'entropie (à savoir le degré de diversité ou de désordre) des valeurs uniques (PUF) générées par une population d'organes électroniques 10. En effet, il pourrait être très utile de pouvoir assurer que chaque organe électronique 10 d'une telle population produise réellement une valeur unique, afin d'exclure que deux organes électroniques 10 distincts produisent accidentellement la même valeur PUF 19. Bien que chaque valeur unique PUF 19 soit définie comme étant unique car intrinsèquement liée au matériel propre qui composent l'organe électronique 10, le risque que deux organes électroniques 10 produisent la même valeur unique 19 peut par exemple être inversement proportionnelle au nombre de composants 11 considérés dans cette organe 10. Or, grâce à la donnée de consigne 14 qui permet de sélectionner les composants 11, et en particulier les combinaison de ces composants, desquels pourront être pour générer chaque bit 18 de la valeur unique 19, il devient également possible de modifier le choix d'une première sélection si l'on s'aperçoit que son résultat (valeur unique 19) a déjà été obtenu par un précédent organe électronique 10. Une telle opération de contrôle de la valeur unique 19 peut être réalisée en répertoriant, par l'enregistrement dans une base de données, toutes les valeurs uniques 19 générées par les précédents organes électroniques 10 d'une même population. Ainsi, dans le cadre d'une opération de personnalisation ou de configuration initiale des organes électroniques 10, le gestionnaire qui possède le contrôle des organes électroniques 10 pourrait avantageusement vérifier que la valeur unique 19 issue d'un nouvel organe électronique 10 soit véritablement unique et reflète donc un caractère personnel, avant que cet organe rejoigne la population d'organes électroniques 10 déjà existants. Une telle vérification pourrait s'opérer rapidement et de manière automatique, en comparant la valeur PUF 19 délivrée par un nouvel organe électronique 10 avec chacune des valeurs uniques 19 répertoriées dans la base de données.

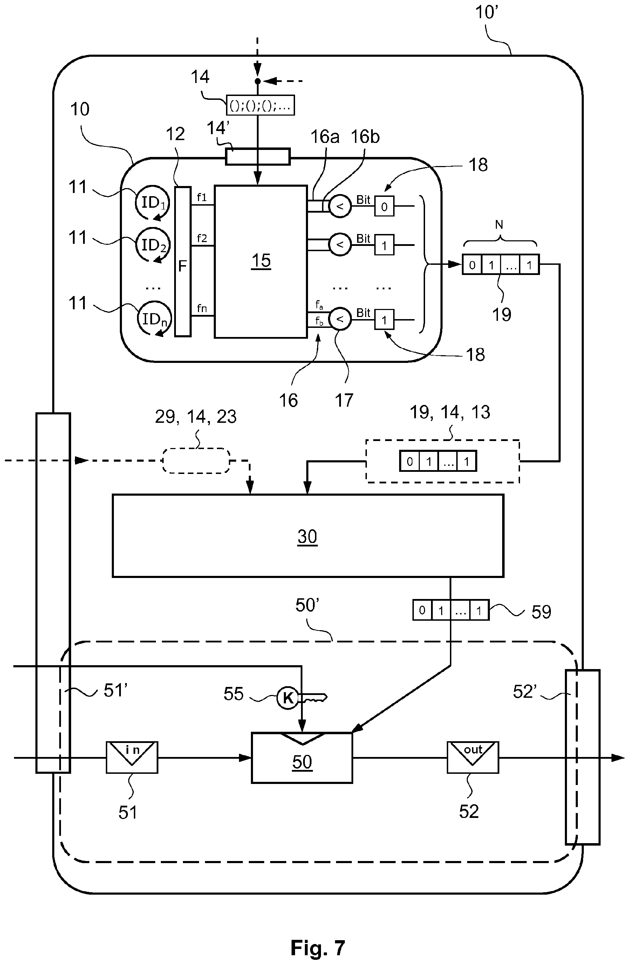

La présente invention concerne également un dispositif cryptographique pour la mise en œuvre du procédé selon l'une quelconque des variantes décrites précédemment. Comme illustré schématiquement à la figure 7, ce dispositif comprend :
- une unité cryptographique 50' pour mettre en œuvre un algorithme cryptographique 50 à partir d'un message d'entrée 51, d'une clé cryptographique 55 et d'une valeur complémentaire 59 utilisée comme paramètre de l'algorithme 50,
- un organe électronique 10 intégrant une pluralité de composants 11 sur chacun desquels au moins une grandeur physique peut être mesurée par un organe de mesure 12 pour obtenir une valeur mesurée f₁, f₂, fₙ, transmise ensuite à une unité centrale 15 (par une connexion reliant cette dernière à l'organe de mesure 12) en vue de générer une valeur unique 19 par l'intermédiaire d'une fonction PUF inhérente à l'organe électronique 10, et
- un module intermédiaire 30 pour paramétrer la valeur complémentaire 59 en fonction de la valeur unique 19.

Selon le mode de réalisation de l'organe électronique 10, l'unité centrale 15 peut intégrer le ou les comparateurs 17 (lesquels peuvent être réalisés sous forme de fonctions logiques) de manière à ce que la valeur unique 19, basées sur les valeurs mesurées et sur la fonction PUF, puisse être issue directement de l'unité centrale 15. De préférence encore, l'organe électronique 10 peut se présenter sous une forme monolithique de sorte que toues les éléments qui le composent se trouvent réunis en un seul bloc. Avantageusement, une telle forme de réalisation offre une protection efficace contre toute tentative de piratage de l'organe électronique 10.

Un tel dispositif pourrait être un module cryptographique telle que le module 10'. L'unité cryptographique 50' permettant de mettre en œuvre l'algorithme 50 est pourvue d'au moins une interface d'entrée 51' et une interface de sortie 52'.

De préférence, l'organe électronique 10 (par exemple son unité centrale 15) est également paramétrable par la donnée de consigne 14 afin de permettre une sélection des composants 11 sur lesquels seront effectuées les mesures physiques f₁, f₂, ... fₙ servant à déterminer la valeur unique 19 par l'intermédiaire de la fonction PUF.

En variante, l'organe électronique 10 pourrait en outre comporter une interface de communication 14' dédiée à l'introduction de la donnée de consigne 14 dans l'unité centrale 15 afin de permettre, si nécessaire, une reconfiguration de l'organe électronique 10. Au besoin, cette interface 14' pourrait également être reliée à l'interface d'entrée 51' du module cryptographique 10'. Par ailleurs, l'organe électronique 10 peut être amovible et/ou séparé du dispositif cryptographique 10', en particulier du reste de ce dispositif.

Dans le cas où l'organe électronique 10 serait séparé, même temporairement, du dispositif cryptographique 10', ce dernier pourrait comprendre en lieu et place de l'organe électronique 10 une interface de communication pour obtenir de cet organe électronique 10 la valeur unique 19 qui lui est physiquement liée. Cette interface pourrait être l'interface d'entrée 51' du dispositif cryptographique 10' ou une interface spécifique. Dans une autre forme d'exécution, une telle interface spécifique pourrait également est utilisée pour que la donnée de consigne 14, destinée à l'organe électronique 10, puisse être reçue par l'intermédiaire du dispositif cryptographique 10'.

De préférence encore et comme déjà mentionné, les composants 11 de l'organe 10 sont des oscillateurs. Cependant, d'autres composants pourraient parfaitement être utilisés afin d'effectuer des mesures autres que des mesures de fréquences. Par ailleurs, les composants 11 ne doivent pas nécessairement être tous de même type et les organes de mesures 12 pourraient également être à même de mesurer différentes grandeurs physiques.

La présente invention vise également à couvrir le seul organe électronique 10 illustré à la figure 3, à savoir un organe permettant au moins de générer une valeur unique 19 par l'intermédiaire d'une fonction physiquement induplicable inhérente à cet organe, et comprenant :
- une pluralité de composants 11 sur chacun desquels au moins une grandeur physique peut être mesurée,
- au moins un organe de mesure 12 pour obtenir une pluralité de valeurs mesurées f₁, f₂, fₙ, chacune propre à un composant 11,
- une interface de communication 14' pour recevoir une donnée de consigne 14 apte à paramétrer la fonction physiquement induplicable en sélectionnant les valeurs mesurées devant y être traitées, et
- une unité centrale 15 pour générer, au moyen de ladite fonction physiquement induplicable, ladite valeur unique 19 à partir desdites valeurs mesurées f₁,f₂, fₙ sélectionnées.

Tel que montré au travers du présent exposé, un tel organe électronique 10 peut trouver une application dans un procédé ou un dispositif cryptographique unique à fonction physiquement induplicable.

Comme expliqué en référence à la figure 4, à chacun des composants 11 de l'organe électronique 10 peut être est associé un identifiant. En intégrant dans la donnée de consigne 14 une indication relative à ces identifiants, cette donnée de consigne permet, dans un mode de réalisation préféré, de sélectionner les composants 11 sur lesquels sont effectuées les mesures physiques f₁,f₂, fₙ. En variante, la donnée de consigne 14 pourrait être utilisée pour sélectionner un ensemble ou un sous-ensemble de mesures parmi les mesures physiques f₁,f₂, fₙ effectuées sur tout ou partie des composants 11.

De préférence, la donnée de consigne 14 comprend une collection de n-uplets renfermant chacun une pluralité d'identifiants ordonnés et sélectionnés parmi les identifiants associés préalablement aux composants 11. Les n-uplets de cette collection peuvent être indexés ou simplement ordonnés au sein de la collection, à savoir être disposés dans un ordre particulier les uns par rapport aux autres.

Selon une forme d'exécution, l'organe électronique 10 pourrait être un module de sécurité ou une carte électronique d'un telle module, par exemple au sein d'un décodeur (set-top-box) de télévision numérique à péage. En variante, l'organe électronique 10 pourrait être logé directement au sein d'un tel décodeur. L'invention est définie par l'objet des revendications indépendantes.

## Revendications

1. Procédé cryptographique pour chiffrer/déchiffrer un message d'entrée (51) au moyen d'un algorithme (50) admettant comme données d'entrée:
- ledit message d'entrée (51),
- une clé cryptographique (55) et
- une valeur complémentaire (59) utilisée comme paramètre dudit algorithme(50), et comme donnée de sortie (52):
le message d'entrée déchiffré/chiffré par ledit algorithme (50) au moyen de la clé cryptographique (55) et de la valeur complémentaire (59),
dans lequel ladite valeur complémentaire (59) étant déterminée sur la base d'une valeur unique (19) physiquement liée à un organe électronique (10) par l'intermédiaire d'une fonction physiquement induplicable qui est inhérente à cet organe (10) et qui est utilisée pour générer cette valeur unique (19) à partir d'une pluralité de mesures physiques (f1 ,f2,fn) effectuées sur des composants (11) intégrés dans ledit organe (10),
dans lequel l'algorithme (50) étant paramétré par la clé cryptographique (55) et admettant également comme donnée d'entrée ladite valeur complémentaire (59) qui est utilisée comme second paramètre de l'algorithme,
dans lequel à chacun desdits composants (11) est associé un identifiant et dans lequel ladite fonction physiquement induplicable est paramétrée par une donnée de personnalisation (14) qui personnalise l'organe électronique (10) lors d'une opération initiale de configuration en sélectionnant les composants (11) sur lesquels sont effectuées lesdites mesures physiques (f1, f2, fn) ou en sélectionnant un ensemble de mesures physiques (f1 ,f2,fn) en fonction desdits composants (11),
**caractérisé en ce que** ladite valeur complémentaire (59) est fonction du résultat d'une comparaison effectuée entre une première donnée (31), découlant de ladite valeur unique (19), et une seconde donnée (32) utilisée comme donnée de référence pour contrôler ladite première donnée (31), et
**caractérisé en ce que** ladite première donnée (31) correspond au résultat d'une fonction appliquée à ladite valeur unique (19) et à la donnée de personnalisation (14), **en ce que** ladite seconde donnée (32) correspond au résultat de la même fonction appliquée à ladite valeur attendue de référence (29) et à cette même donnée de personnalisation (14).

2. Procédé selon la revendication 1, **caractérisé en ce que** ladite donnée de personnalisation (14) fournit une collection de n-uplets indexés contenant chacun une pluralité d'identifiants ordonnés, sélectionnés parmi lesdits identifiants associés aux composants (11), et **en ce que** ladite valeur unique (19) est déterminée par les étapes consistant à:
- lire la donnée de personnalisation (14),
- obtenir pour chaque identifiant de chaque n-uplet une mesure d'une grandeur physique dudit composant (11) auquel est associé cet identifiant et former respectivement en correspondance une seconde collection de n-uplets indexés contenant les valeurs ainsi mesurées (f1 ,f2,fn),
- identifier, pour chaque n-uplet de la seconde collection, la valeur mesurée qui est la plus extrême et associer audit n-uplet de la seconde collection une valeur élémentaire (18) en fonction de la position de cette valeur mesurée la plus extrême au sein dudit n-uplet,
- combiner successivement lesdites valeurs élémentaires (18) en fonction des index des n-uplets auxquels ces valeurs élémentaires (18) sont associées, pour obtenir ladite valeur unique (19).

3. Procédé selon l'une des revendications précédentes, **caractérisé en ce que** ladite valeur complémentaire (59) est identique à ladite valeur unique (19).

4. Procédé selon l'une des revendications 1 à 2, **caractérisé en ce que** ladite première donnée (31) est dérivée de ladite valeur unique (19), et ladite seconde donnée (32) est dérivée d'une valeur attendue de référence (29) définie comme étant la valeur que produit ladite fonction physiquement induplicable lors de ladite opération de configuration.

5. Procédé selon l'une des revendications 1 à 2, **caractérisé en ce que** lesdites première et seconde donnée (31, 32) correspondent chacune au résultat d'une fonction appliquée respectivement à ladite valeur unique (19) et à ladite valeur attendue de référence (29).

6. Procédé selon l'une des revendications précédentes, **caractérisé en ce que** ledit organe électronique (10) acquière ladite donnée de personnalisation (14) soit directement par la lecture d'une source interne à l'organe électronique (10), soit indirectement par l'intermédiaire d'une interface de communication reliant l'organe électronique (10) à une source externe.

7. Dispositif cryptographique (10') pour la mise en oeuvre du procédé selon l'une quelconque des revendications 1 à 8, comprenant:
- une unité cryptographique (50') pour mettre en oeuvre un algorithme cryptographique (50) à partir d'un message d'entrée (51), d'une clé cryptographique (55) et d'une valeur complémentaire (59) utilisée comme paramètre dudit algorithme (50),
- un organe électronique (10) intégrant une pluralité de composants (11) sur chacun desquels au moins une grandeur physique peut être mesurée par un organe de mesure (12) pour obtenir une valeur mesurée (f1 ,f2,fn) transmise ensuite à une unité centrale (15) pour générer une valeur unique (19) par l'intermédiaire d'une fonction physiquement induplicable inhérente audit organe électronique (10),
**caractérisé en ce qu'**il comprend en outre un module intermédiaire (30) pour paramétrer ladite valeur complémentaire (59) en fonction de ladite valeur unique (19),
**caractérisé en ce que** ledit organe électronique (10) est paramétrable par une donnée de personnalisation (14) qui permet de sélectionner les composants (11) sur lesquels sont effectuées lesdites mesures ou de sélectionner des valeurs mesurées (f1 ,f2,fn) en fonction desdits composants (11),
**caractérisé en ce que** ladite valeur complémentaire (59) est fonction du résultat d'une comparaison effectuée entre une première donnée (31), découlant de ladite valeur unique (19), et une seconde donnée (32) utilisée comme donnée de référence pour contrôler ladite première donnée (31), et
**caractérisé en ce que** ladite première donnée (31) correspond au résultat d'une fonction appliquée à ladite valeur unique (19) et à la donnée de personnalisation (14), **en ce que** ladite seconde donnée (32) correspond au résultat de la même fonction appliquée à ladite valeur attendue de référence (29) et à cette même donnée de personnalisation (14).

8. Dispositif cryptographique (10') selon la revendication 7, **caractérisé en ce que** ledit organe électronique (10) est amovible et/ou séparé du dispositif cryptographique (10').

## Patentansprüche

1. Kryptographisches Verfahren zum Verschlüsseln/Entschlüsseln einer Eingangsnachricht (51) mittels eines Algorithmus (50), der als Eingangsdaten zulässt:
- die Eingangsnachricht (51),
- einen kryptographischen Schlüssel (55) und
- einen komplementären Wert (59), der als Parameter des Algorithmus (50) verwendet wird, und als Ausgabedaten (52):
die Eingangsnachricht, die durch den Algorithmus (50) mittels des kryptographischen Schlüssels (55) und des komplementären Wertes (59) entschlüsselt/verschlüsselt wurde,
wobei der komplementäre Wert (59) auf der Grundlage eines eindeutigen Wertes (19) bestimmt wird, der physikalisch mit einem elektronischen Organ (10) über eine physikalisch nicht reproduzierbare Funktion verbunden ist, die diesem Organ (10) inhärent ist und die zum Erzeugen dieses eindeutigen Wertes (19) aus einer Vielzahl von physikalischen Messungen (f1, f2, fn) verwendet wird, die an Komponenten (11) durchgeführt werden, die in das Organ (10) integriert sind,
wobei der Algorithmus (50) durch den kryptographischen Schlüssel (55) parametrisiert wird und als Eingangsdaten auch den komplementären Wert (59) zulässt, der als zweiter Parameter des Algorithmus verwendet wird,
wobei jeder der Komponenten (11) eine Kennung zugeordnet ist und wobei die physikalisch nicht reproduzierbare Funktion durch Personalisierungsdaten (14) parametrisiert ist, die das elektronische Organ (10) bei einem anfänglichen Konfigurationsvorgang personalisieren, indem die Komponenten (11) ausgewählt werden, an denen die physikalischen Messungen (f1, f2, fn) durchgeführt werden, oder indem ein Satz physikalischer Messungen (f1, f2, fn) in Abhängigkeit von den Komponenten (11) ausgewählt wird,
**dadurch gekennzeichnet, dass** der komplementäre Wert (59) von dem Ergebnis eines Vergleichs abhängt, der zwischen einem ersten Datenwert (31), der sich aus dem eindeutigen Wert (19) ergibt, und einem zweiten Datenwert (32), der als Referenzdaten zum Steuern des ersten Datenwerts (31) verwendet wird, durchgeführt wird, und
**dadurch gekennzeichnet, dass** der erste Datenwert (31) dem Ergebnis einer Funktion entspricht, die auf den eindeutigen Wert (19) und die Personalisierungsdaten (14) angewendet wird, dass der zweite Datenwert (32) dem Ergebnis der gleichen Funktion entspricht, die auf den erwarteten Referenzwert (29) und die gleichen Personalisierungsdaten (14) angewendet wird.

2. Verfahren nach Anspruch 1, **dadurch gekennzeichnet, dass** die Personalisierungsdaten (14) eine Sammlung von indizierten n-Tupeln liefern, die jeweils eine Vielzahl von geordneten Kennungen enthalten, die aus den Kennungen ausgewählt werden, die den Komponenten (11) zugeordnet sind, und dass der eindeutige Wert (19) durch die Schritte bestimmt wird, bestehend aus:
- einem Lesen der Personalisierungsdaten (14),
- einem Erhalten einer Messung einer physikalischen Größe der Komponente (11), der diese Kennung zugeordnet ist, für jede Kennung jedes n-Tupels und Bilden einer zweiten Sammlung von indizierten n-Tupeln, die die so gemessenen Werte (f1, f2, fn) enthalten, jeweils in Übereinstimmung,
- Identifizieren des gemessenen Wertes für jedes n-Tupel der zweiten Sammlung, der der extremste ist, und Zuordnen zu dem n-Tupel der zweiten Sammlung einen elementaren Wert (18) in Abhängigkeit von der Position dieses extremsten gemessenen Wertes innerhalb des n-Tupels,
- sukzessives Kombinieren der elementaren Werte (18) in Abhängigkeit von den Indizes der n-Tupel, denen diese elementaren Werte (18) zugeordnet sind, zum Erhalten des eindeutigen Wertes (19).

3. Verfahren nach einem der vorhergehenden Ansprüche, **dadurch gekennzeichnet, dass** der komplementäre Wert (59) mit dem eindeutigen Wert (19) identisch ist.

4. Verfahren nach einem der Ansprüche 1 bis 2, **dadurch gekennzeichnet, dass** der erste Datenwert (31) von dem eindeutigen Wert (19) abgeleitet wird und der zweite Datenwert (32) von einem erwarteten Referenzwert (29) abgeleitet wird, der als der Wert definiert ist, den die physikalisch nicht reproduzierbare Funktion während des Konfigurationsvorgangs erzeugt.

5. Verfahren nach einem der Ansprüche 1 bis 2, **dadurch gekennzeichnet, dass** der erste und der zweite Datenwert (31, 32) jeweils dem Ergebnis einer Funktion entsprechen, die auf den eindeutigen Wert (19) beziehungsweise den erwarteten Referenzwert (29) angewendet wird.

6. Verfahren nach einem der vorhergehenden Ansprüche, **dadurch gekennzeichnet, dass** das elektronische Organ (10) die Personalisierungsdaten (14) entweder direkt durch das Auslesen aus einer Quelle innerhalb des elektronischen Organs (10) oder indirekt über eine Kommunikationsschnittstelle, die das elektronische Organ (10) mit einer externen Quelle verbindet, erlangt.

7. Kryptographische Vorrichtung (10') zum Durchführen des Verfahrens nach einem der Ansprüche 1 bis 8, umfassend:
- eine kryptographische Einheit (50') zum Durchführen eines kryptographischen Algorithmus (50) ausgehend von einer Eingangsnachricht (51), einem kryptographischen Schlüssel (55) und einem komplementären Wert (59), der als Parameter des Algorithmus (50) verwendet wird,
- ein elektronisches Organ (10), das eine Vielzahl von Komponenten (11) integriert, an denen jeweils mindestens eine physikalische Größe durch ein Messorgan (12) , zum Erhalten eines gemessenen Werts (f1, f2, fn) gemessen werden kann, der anschließend an eine Zentraleinheit (15) zum Erzeugen eines eindeutigen Wertes (19) über eine dem elektronischen Organ (10) inhärente physikalisch nicht reproduzierbare Funktion übertragen wird,
**dadurch gekennzeichnet, dass** es ferner ein Zwischenmodul (30) zum Parametrisieren des komplementären Werts (59) in Abhängigkeit von dem eindeutigen Wert (19) umfasst,
**dadurch gekennzeichnet, dass** das elektronische Organ (10) durch ein Personalisierungsdatum (14) parametrierbar ist, das es ermöglicht, die Komponenten (11) auszuwählen, an denen die Messungen durchgeführt werden, oder Messwerte (f1, f2, fn) in Abhängigkeit von den Komponenten (11) auszuwählen,
**dadurch gekennzeichnet, dass** der komplementäre Wert (59) von dem Ergebnis eines Vergleichs abhängt, der zwischen einem ersten Datenwert (31), der sich aus dem eindeutigen Wert (19) ergibt, und einem zweiten Datenwert (32), der als Referenzdaten zum Steuern des ersten Datenwerts (31) verwendet wird, durchgeführt wird, und
**dadurch gekennzeichnet, dass** der erste Datenwert (31) dem Ergebnis einer Funktion entspricht, die auf den eindeutigen Wert (19) und die Personalisierungsdaten (14) angewendet wird, dass der zweite Datenwert (32) dem Ergebnis der gleichen Funktion entspricht, die auf den erwarteten Referenzwert (29) und die gleichen Personalisierungsdaten (14) angewendet wird.

8. Kryptographische Vorrichtung (10') nach Anspruch 7, **dadurch gekennzeichnet, dass** das elektronische Organ (10) abnehmbar und/oder von der kryptographischen Vorrichtung (10') getrennt ist.

## Claims

1. Cryptographic method for encrypting/decrypting an input message (51) by means of an algorithm (50) which admits as input data:
- said input message (51),
- a cryptographic key (55) and
- a complementary value (59) used as a parameter of said algorithm (50), and as output data (52):
the input message decrypted/encrypted by said algorithm (50) by means of the cryptographic key (55) and the complementary value (59),
wherein said complementary value (59) is determined on the basis of a unique value (19) physically linked to an electronic device (10) via a physically unclonable function which is inherent in this device (10) and which is used to generate this unique value (19) from a plurality of physical measurements (f1, f2, fn) carried out on components (11) integrated in said device (10),
wherein the algorithm (50) is parameterized by the cryptographic key (55) and also admits as input data said complementary value (59) which is used as a second parameter of the algorithm,
wherein each of said components (11) is associated with an identifier and wherein said physically unclonable function is parameterized by a personalization data item (14) which personalizes the electronic device (10) during an initial configuration operation by selecting the components (11) on which said physical measurements (f1, f2, fn) are carried out or by selecting a set of physical measurements (f1, f2, fn) according to said components (11),
**characterized in that** said complementary value (59) is a function of the result of a comparison carried out between a first data item (31), derived from said unique value (19), and a second data item (32) used as a reference data item for checking said first data item (31), and
**characterized in that** said first data item (31) corresponds to the result of a function applied to said unique value (19) and to the personalization data item (14), **in that** said second data item (32) corresponds to the result of the same function applied to said expected reference value (29) and to this same personalization data item (14).

2. Method according to claim 1, **characterized in that** said personalization data item (14) provides a collection of indexed n-tuples each containing a plurality of ordered identifiers, selected from among said identifiers associated with the components (11), and **in that** said unique value (19) is determined by the steps of:
- reading the personalization data item (14),
- obtaining, for each identifier of each n-tuple, a measurement of a physical quantity of said component (11) with which this identifier is associated and respectively forming, correspondingly, a second collection of indexed n-tuples containing the values thus measured (f1, f2, fn),
- identifying, for each n-tuple of the second collection, the most extreme measured value and associating an elementary value (18) with said n-tuple of the second collection according to the position of this most extreme measured value within said n-tuple,
- successively combining said elementary values (18) according to the indexes of the n-tuples with which these elementary values (18) are associated, in order to obtain said unique value (19).

3. Method according to one of the preceding claims, **characterized in that** said complementary value (59) is identical to said unique value (19).

4. Method according to one of claims 1 to 2, **characterized in that** said first data item (31) is derived from said unique value (19), and said second data item (32) is derived from an expected reference value (29) defined as being the value produced by said physically unclonable function during said configuration operation.

5. Method according to one of claims 1 to 2, **characterized in that** said first and second data item (31, 32) each correspond to the result of a function applied respectively to said unique value (19) and to said expected reference value (29).

6. Method according to one of the preceding claims, **characterized in that** said electronic device (10) acquires said personalization data item (14) either directly by reading a source internal to the electronic device (10), or indirectly via a communication interface connecting the electronic device (10) to an external source.

7. Cryptographic device (10') for implementing the method according to any one of claims 1 to 8, comprising:
- a cryptographic unit (50') for implementing a cryptographic algorithm (50) on the basis of an input message (51), a cryptographic key (55) and a complementary value (59) used as a parameter of said algorithm (50),
- an electronic device (10) incorporating a plurality of components (11), on each of which at least one physical quantity can be measured by a measuring device (12) in order to obtain a measured value (f1, f2, fn) which is then transmitted to a central unit (15) in order to generate a unique value (19) via a physically unclonable function inherent to said electronic device (10),
**characterized in that** it further comprises an intermediate module (30) for parameterizing said complementary value (59) on the basis of said unique value (19),
**characterized in that** said electronic device (10) can be parameterized by a personalization data item (14) which makes it possible to select the components (11) on which said measurements are carried out or to select measured values (f1, f2, fn) on the basis of said components (11),
**characterized in that** said complementary value (59) is a function of the result of a comparison carried out between a first data item (31), derived from said unique value (19), and a second data item (32) used as a reference data item for checking said first data item (31), and
**characterized in that** said first data item (31) corresponds to the result of a function applied to said unique value (19) and to the personalization data item (14), **in that** said second data item (32) corresponds to the result of the same function applied to said expected reference value (29) and to this same personalization data item (14).

8. Cryptographic device (10') according to claim 7, **characterized in that** said electronic device (10) is removable and/or separate from the cryptographic device (10').
